# FASCICULE DE BREVET EUROPEEN

(11) **EP 0 497 715 B1**
(45) Date de publication et mention de la délivrance du brevet: **20.04.1994**
(21) Numéro de dépôt: 92420031.4
(22) Date de dépôt: 27.01.1992
(51) Int. Cl.: B60P 3/077

(54) **Dispositif de calage de véhicules disposés sur des planchers de remorques de transport ou wagons de chemin de fer**
Einrichtung zum Verkeilen von Fahrzeugen, die auf Böden von Transportanhängern oder Eisenbahnwaggons vorgesehen sind
Device for wedging of vehicles provided on floors of transport trailers or railway waggons

(30) Priorité: 01.02.1991 FR 9101557
(43) Date de publication de la demande: 05.08.1992
(73) Titulaire: SOCIETE DE FABRICATION ET DE COMMERCIALISATION - SOFACO- S.A., 42405 Saint Chamond Cédex (FR)
(72) Inventeur: Gorgy, Bernard, F-42400 Saint-Chamond (FR); Souchon, Jean, F-42320 La Grand Croix (FR); Françon, Gérard, F-42400 Saint-Chamond (FR); Escot, André, F-42320 Farnay (FR)
(74) Mandataire: Dupuis, François

(56) Documents cités:
- EP-A- 0 284 532
- EP-A- 0 366 571
- FR-A- 2 376 017
- FR-A- 2 419 198

## Description

L'invention a pour objet un dispositif perfectionné de calage de véhicules disposés sur des planchers de remorques de transport ou wagons de chemin de fer, et moyens de transport similaires.

Pour acheminer les véhicules neufs et d'occasion, de leur lieu de fabrication vers les concessionnaires automobiles, garages ou services similaires, les véhicules sont transportés soit par chemin de fer, soit par des camions ou semi-remorques, ou remorques aménagées en autorisant le rangement simultané en long et éventuellement côte à côte d'une ou plusieurs voitures.

Les voitures qui sont ainsi stationnées sur la ou les plates-formes du transporteur doivent être maintenues par des cales disposées entre les roues, indépendamment de l'utilisation et serrage du frein à main. Ces cales doivent assurer la stabilité des voitures pendant le trajet.

Différents types de cales ont déjà été proposés tels que ceux décrits dans les Brevets français 2.419.198, 2.376.017 ou EP 0.284.532.

La Demanderesse a également proposé un dispositif de calage de véhicules correspondant au préambule de la revendication 1 et décrit et défini dans le EP-A-0 366.571.

Dans le cadre de ses recherches et études complémentaires sur de tels dispositifs, en vue d'améliorer encore les conditions de sécurité et d'adaptabilité à tous véhicules, de manipulation, la Demanderesse a été amenée à concevoir un dispositif de calage amélioré faisant l'objet de la revendication 1.

Ce dispositif est particulièrement avantageux en ce qu'il est utilisable même avec une garde au sol de la voiture très basse, telle que par exemple jusqu'à une hauteur d'environ 55 millimètres de celle-ci. Il peut en outre s'adapter sur tous types de planchers. d'articulation de l'ensemble du dispositif de calage.

Selon une autre caractéristique préférée, le sabot est profilé en U avec deux ailes en regard, aménagées avec des ouvertures pour autoriser le coulissement du sabot le long du bras, lesdites ailes recevant dans leurs parties supérieures une tige permettant le contact et l'appui de la roue du véhicule, la partie médiane dudit sabot venant en appui sur l'aire de stockage.

Ces caractéristiques et d'autres encore ressortiront bien de la suite de la description.

Pour fixer l'objet de l'invention illustré, d'une manière non limitative, aux figures des dessins où :

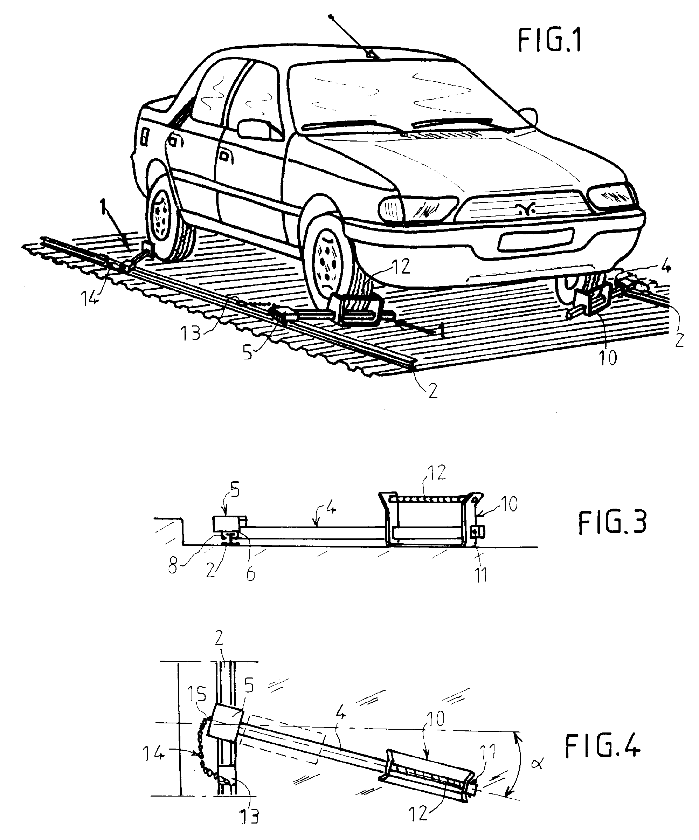

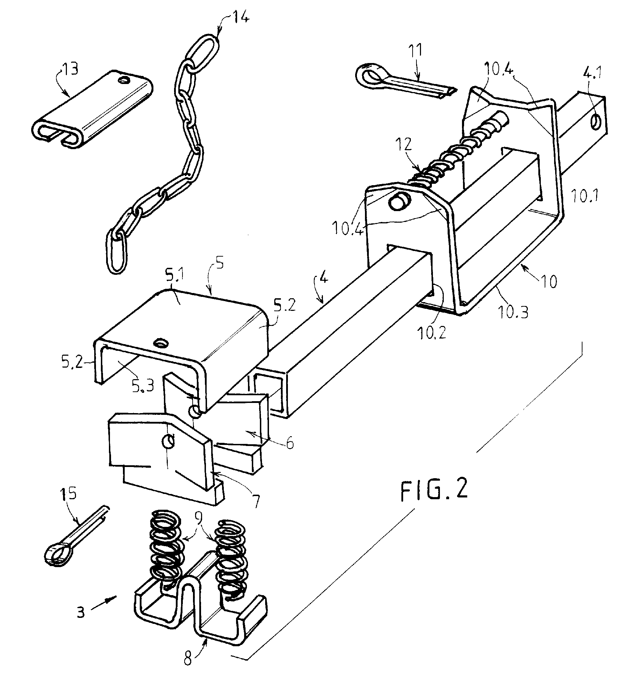

La figure 1 est une vue montrant l'utilisation de plusieurs dispositifs de blocage, selon l'invention, positionnés sur un plancher et autorisant le maintien d'une automobile.

La figure 2 est une vue en perspective éclatée montrant le dispositif de calage selon l'invention.

La figure 3 est une vue à caractère schématique de face montrant le positionnement du dispositif de calage.

La figure 4 est une vue en plan selon la figure 3.

La figure 5 est une vue montrant le dispositif de calage, dans une autre position adaptée à un véhicule.

La figure 6 est une vue en perspective partielle illustrant un mode de réalisation en variante du sabot.

La figure 7 est une vue en coupe longitudinale selon la ligne A-A de la figure 6.

Afin de rendre plus concept l'objet de l'invention, on le décrit maintenant d'une manière non limitative aux figures des dessins.

Le dispositif de calage de véhicule est référencé dans son ensemble par (1). Ce dispositif est monté coulissant sur un ou plusieurs rails de guidage (2) profilés disposés sur l'aire de stockage.

Le dispositif comprend des moyens référencés dans leur ensemble par (3) susceptibles de se positionner et s'accoupler sur chaque rail de guidage, en autorisant une orientation angulaire contrôlée d'un bras (4) profilé fixé sur la structure (5) recevant lesdits moyens (3).

Cette structure et les moyens (3) précités peuvent être par exemple ceux décrits dans le EP-A- 366.571, et en particulier ceux illustrés aux figures 16 à 22. Succinctement et de manière non limitative, cette structure (5) comprend un curseur (5.1) agencé avec un profil en U dont les ailes (5.2) se trouvent orientées dans un plan perpendiculaire au rail et dans le même plan que le bras de calage (4). Ce curseur est agencé pour recevoir, entre ses ailes et près des extrémités de celles-ci, deux pattes profilées (6 et 7) identiques et orientées fixées en regard contre la face intérieure (5.3) du curseur. Ces pattes sont agencées pour permettre le positionnement intérieur d'un chapeau profilé (8) avec des moyens de rappel (9) et une goupille de verrouillage (15) ; le fonctionnement de ces différents moyens a été largement décrit dans la demande précitée.

Selon le dispositif de calage perfectionné, le bras (4) profilé est fixé par soudage ou autrement contre l'une des pattes (6) de la structure précitée. Ce bras de grande longueur reçoit à coulissemennt contrôlé et limité, un sabot (10) profilé en U. Ce dernier comprend ainsi deux ailes (10.1) en regard aménagées avec une découpe (10.2) profilée de manière complémentaire à la section du bras pour autoriser l'insertion de ce dernier et le coulissement dudit sabot le long du bras. Une goupille (11) de verrouillage est disposée et fixée à l'extrémité du bras dans une ouverture appropriée (4.1) pour permettre le cas échéant l'enlèvement dudit sabot. En outre, le sabot présente dans sa partie supérieure entre ses ailes une tige (12) constituant la zone d'appui de l'une des roues du véhicule. Cette tige présente avantageusement des stries (12.1) anti-dérapantes.

Par ailleurs, le extrémités (10.4) des ailes des sabots sont avantageusement évasées vers l'extérieur pour faciliter le positionnement de la roue du véhicule sans risque de contact impromptu.

Ainsi qu'il apparaît, l'extrémité libre du bras ne présente aucun moyen particulier d'appui et ne vient pas directement en contact avec le plancher ou aire de stockage. C'est plutôt le sabot (10), par sa base médiane (10.3), qui vient en contact avec le plancher. Ce sabot est ainsi réglable en position le long du bras en fonction de l'emplacement du véhicule. Ce sabot assure par ailleurs une seconde fonction qui est de constituer le moyen de préhension et d'articulation du bras de l'ensemble du dispositif de calage.

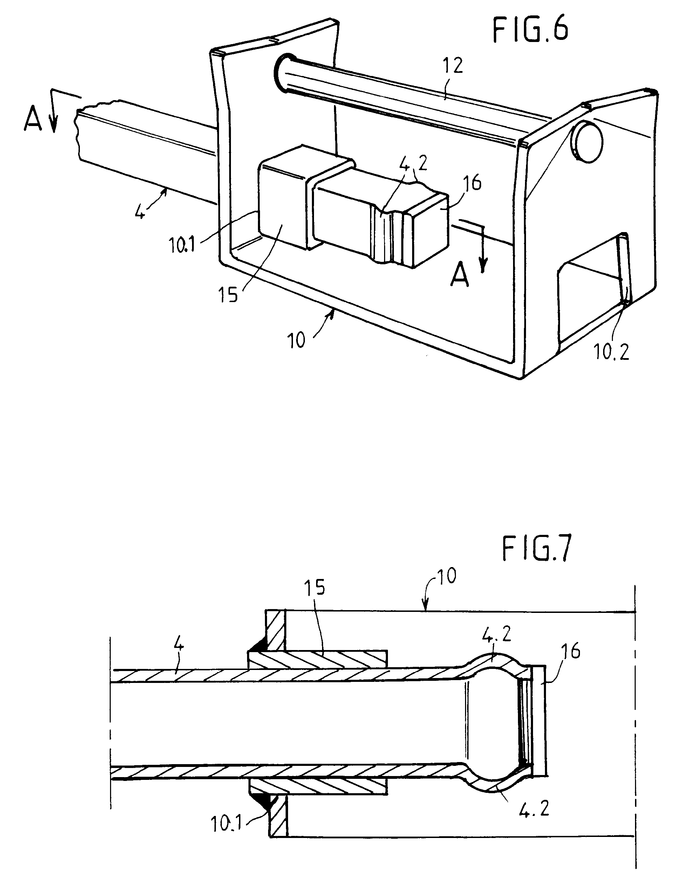

On a illustré aux figures 6 et 7 une variante de mise en oeuvre du sabot (10) sur le bras (4). Dans cette réalisation, le sabot présente, du côté intérieur de l'une des ailes (10.1), un manchon (15) profilé formant guide et autorisant l'engagement et le coulissement du sabot sur le bras (4) précité. La liaison du manchon sur l'aile en regard est obtenue par thermo-soudure ou autre. La longueur du manchon est telle qu'elle permet un guidage approprié du sabot sur le bras.

Selon une autre disposition, le bras (4) est agencé à son extrémité libre avec des renflements (4.2) formés sur les côtés latéraux du bras, permettant ainsi, après introduction du sabot sur le bras, l'indémontabilité de l'un par rapport à l'autre. Le sabot est limité dans son déplacement vers l'extérieur par le fait que le chant d'extrémité du manchon vient en butée contre lesdits renflements. L'autre aile du sabot présente une découpe permettant le passage du bras (4).

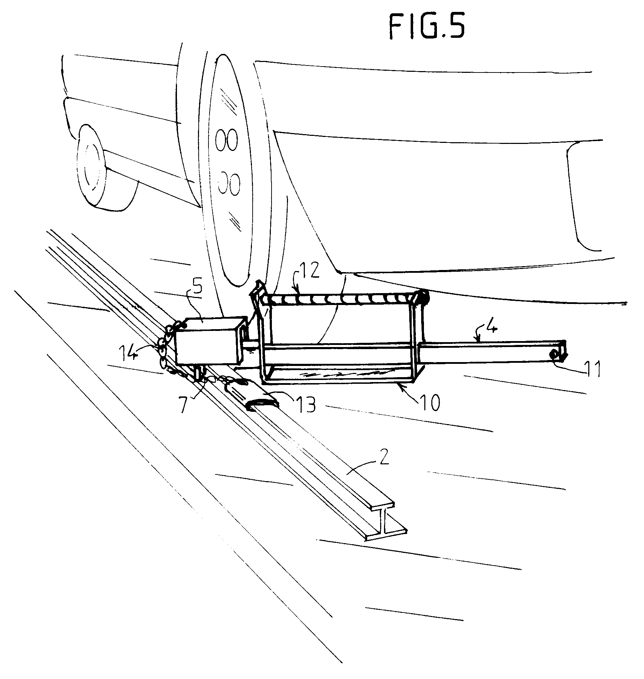

Avantageusement, l'extrémité du bras susceptible de recevoir un capuchon (16). Dans cette variante, le bras peut être d'une longueur raccourcie par rapport à celui illustré figure 5 des dessins, le sabot (10) pouvant déborder de l'extrémité du bras tout en étant maintenu par son manchon en butée contre les renflements. La longueur du manchon est par ailleurs telle qu'elle permet un contre-appui sûr et efficace lorsque la roue d'automobile vient en appui.

Ainsi, selon l'invention, on simplifie ainsi considérablement la mise en oeuvre du dispositif de calage. En outre, le bras est abaissé au maximum en étant fixé dans la partie inférieure de la structure (5); à savoir la patte (6) dans l'exemple considéré. Cet abaissement du bras permet ainsi une utilisation du dispositif de calage pour tous types de véhicules, y compris ceux ayant une garde au sol (h) très basse, de l'ordre par exemple et non limitativement de 50 à 60 millimètres. Le sabot étant réglable en position le long du bras, il n'y a ainsi aucune contrainte ou gêne par rapport à l'emplacement du véhicule sur l'aire de stockage ou plancher. La tenue du véhicule est améliorée par l'existence même du sabot et des tiges de maintien, tandis que les ailes peuvent permettre une meilleure tenue de la roue latéralement.

On doit également considérer que la manipulation est aisée. Le sabot étant réglable en position, l'amplitude d'articulation du dispositif peut varier.

Les moyens qui permettent le positionnement du dispositif de calage sur le rail ne sont pas limités à ceux illustrés et décrits dans la présente Demande. Il y a lieu essentiellement de considérer que chaque bras (4) est fixé par tous moyens appropriés à la structure-support (5) se déplaçant le long du rail et assurant l'orientation et verrouillage en position du bras par rapport au rail de guidage.

A titre complémentaire ainsi qu'illustré aux dessins, la structure peut recevoir un moyen d'attache (13) associé par une chaînette (14). Ce moyen d'attache est fixé à déplacement contrôlé sur le rail, tandis que la chaînette est reliée à ce dernier ainsi qu'à la structure précitée. On peut ainsi contrôler très facilement le stockage desdits dispositifs de calage.

## Revendications

1. Dispositif de calage (1) perfectionné de véhicule disposé sur des planchers de remorques de transport ou wagons de chemin de fer du type comprenant un rail de guidage (2) profilé disposé sur l'aire de stockage recevant, à déplacement contrôlé et limité, des moyens sous forme de curseurs (5.1) associés chacun à une structure (5) contre laquelle est fixé un bras profilé (4) pouvant être pivoté angulairement, caractérisé en ce que chaque bras (4) est fixé dans la partie inférieure de la structure (5) pour autoriser un positionnement avec une très faible garde au sol du véhicule, et en ce que chaque bras (4) reçoit, à coulissement contrôlé et limité, un sabot (10) profilé recevant un moyen (12) d'appui et de butée de chaque roue de véhicule, ledit sabot (10) constituant le moyen de préhension et d'articulation de l'ensemble du dispositif de calage (1).

2. Dispositif de calage selon la revendication 1, caractérisé en ce que le sabot (10) est profilé en U avec deux ailes (10.1) en regard, aménagées avec des ouvertures (10.2) pour autoriser le coulissement du sabot le long du bras, lesdites ailes recevant dans leurs parties supérieures une tige (12) permettant le contact et l'appui de la roue du véhicule, la partie médiane (10.3) dudit sabot venant en appui sur l'aire de stockage.

3. Dispositif de calage selon la revendication 2, caractérisé en ce que la tige (12) présente des stries anti-dérapantes (12.1).

4. Dispositif de calage selon la revendication 2, caractérisé en ce que l'extrémité du bras reçoit un moyen de verrouillage (11) du type goupille.

5. Dispositif de calage selon la revendication 2, caractérisé en ce que la partie supérieure (10.4) des ailes (10.2) du sabot est évasée.

6. Dispositif de calage selon la revendication 2, caractérisé en ce que l'une des ailes (10.1) du sabot (10) reçoit intérieurement un manchon (15) profilé de grande longueur autorisant le passage et le guidage du bras (4) et en ce que l'extrémité libre dudit bras (4) présente latéralement des renflements (4.2) assurant l'indémontabilité du sabot par rapport au bras.

7. Dispositif de calage selon la revendication 6, caractérisé en ce que l'extrémité du bras reçoit un capuchon.

## Patentansprüche

1. Verbesserte Einrichtung zum Verkeilen (1) von Fahrzeugen auf den Böden von Transportanhängern oder Eisenbahnwaggons, in der Art bestehend aus einer auf der Stellfläche angeordneten profilierten Führungsschiene (2), auf der verstellbar und begrenzt verschiebbar jeweils mit einem Aufsatz (5) kombinierte, schieberförmige (5.1) Teile sitzen, an denen wiederum ein in einem bestimmten Winkel schwenkbarer profilierter Arm (4) befestigt ist, dadurch gekennzeichnet, daß jeder Arm (4) unten am Aufsatz (5) so angebracht ist, daß auch Fahrzeuge mit sehr geringer Bodenfreiheit abgestellt werden können, sowie daß auf jedem Arm (4) verstellbar und begrenzt verschiebbar ein profilierter Halteschuh (10) zur Aufnahme eines Teils (12), das als Widerlager und Anschlag für jedes Rad des Fahrzeugs dient, sitzt, wobei der besagte Halteschuh (10) für festen Sitz sorgt und als Gelenk der gesamten Verkeilungseinrichtung (1) dient.

2. Verkeilungseinrichtung nach Anspruch 1, dadurch gekennzeichnet, daß der Halteschuh (10) U-förmig und mit zwei gegenüberliegenden Schenkeln (10.1) ausgebildet ist, in denen zum leichteren Verschieben des Schuhs auf dem Arm Öffnungen (10.2) vorhanden sind, wobei das Rad des Fahrzeugs an einer oben an den besagten Schenkeln angebrachten Stange (12) nach Kontakt fest ansteht und der Mittelteil (10.3) des genannten Schuhs auf der Stellfläche aufliegt.

3. Verkeilungseinrichtung nach Anspruch 2, dadurch gekennzeichnet, daß die Stange (12) aus Gründen der Rutschsicherheit geriefelt (12.1) ist.

4. Verkeilungseinrichtung nach Anspruch 2, dadurch gekennzeichnet, daß am Ende des Arms eine Arretiermöglichkeit (11), etwa ein Splint, vorhanden ist.

5. Verkeilungseinrichtung nach Anspruch 2, dadurch gekennzeichnet, daß sich die Schenkel (10.2) des Halteschuhs nach oben (10.4) hin verbreitern.

6. Verkeilungseinrichtung nach Anspruch 2, dadurch gekennzeichnet, daß an einem der Schenkel (10.1) des Halteschuhs (10) innen eine sehr lange, profilierte Hülse (15) eingesetzt ist, in der sich der Arm (4) verschieben und führen läßt, sowie dadurch, daß der genannte Arm (4) an seinem freien Ende seitlich verdickt (4.2) ist, so daß der Halteschuh unlösbar auf dem Arm festgelegt ist.

7. Verkeilungseinrichtung nach Anspruch 6, dadurch gekennzeichnet, daß der Arm an seinem Ende eine Schutzkappe trägt.

## Claims

1. Advanced device (1) for wedging of vehicles provided on floors of transport trailers or railway waggons of the type comprising a profiled guide rail (2) disposed on the storage platform interacting with means in the form of slides (5.1) capable of limited and controlled movement, each slide being connected to a structure (5), to which an angularly pivotable profiled arm (4) is attached characterized in that each arm (4) is attached to the lower part of structure (5) to allow the vehicle to be positioned with very little ground clearance and in that each arm (4) is equipped with a profiled shoe (10) capable of limited and controlled sliding movement, said shoe (10) holding a securing and stopping means (12) for each wheel of the vehicle and acting as the gripping and articulating means for the entire wedging device (1).

2. Wedging device as claimed in claim 1, characterized in that shoe (10) is U-shaped having two facing side members (10.1) designed with openings (10.2) to allow the shoe to slide along the arm, a rod (12) being fitted in the upper part of said side members to support the wheel of the vehicle, the middle part (10.3) of said shoe resting on the storage platform.

3. Wedging device as claimed in claim 2, characterized in that rod (12) has non-slip ridges (12.1).

4. Wedging device as claimed in claim 2, characterized in that a pin-type locking means (11) is fitted to the end of the arm.

5. Wedging device as claimed in claim 2, characterized in that the upper part (10.4) of side members (10.2) of the shoe widens out at the end.

6. Wedging device as claimed in claim 2, characterized in that a very long profiled sleeve (15) is fitted inside one of the side members (10.1) of shoe (10) in order to receive and guide arm (4) and in that the free end of said arm (4) has side swellings (4.2) to ensure that the slide cannot be removed from the arm.

7. Wedging device as claimed in claim 6, characterized in that a cap is fitted to the end of the arm.
